# EUROPEAN PATENT APPLICATION

(11) **EP 1 982 605 A1**
(43) Date of publication of application: **22.10.2008**
(21) Application number: 07106259.0
(22) Date of filing: 16.04.2007
(51) Int. Cl.: A23N 15/08

(54) **Peeled onion and method for peeling an onion**

(71) Applicant: Gourmet B.V., 1614 MG Grootebroek (NL)
(72) Inventor: Broersen, Johannes Nicolaas Maria, 1614 MG, Grootebroek (NL)
(74) Representative: Vernout, Robert

(57) **Abstract**

Method for peeling an onion (1) comprising a bulb (2) having a bottom (3) and a neck (4), wherein at least one outer most withered skin (6) of the onion (1) is removed, and wherein said bottom (3) and at least part of said neck (4) of the onion is not removed from the onion and in that the pellicle (7) extending immediately under the at least one removed most withered skin (6) and enclosing an outer less withered skin (5) of the bulb (2) and said part of the neck (4) is also not removed.

## Description

The invention relates to a method for peeling an onion comprising a bulb having a bottom and a neck, wherein at least one outer most withered skin of the onion is removed.

Such a method is widely used in the industry. Consumers prefer to buy peeled onions, for instance because it is convenient and saves them time in the kitchen, or because the onion has a better appearance. However, by the currently used methods, the bottom and the neck of the onion are generally cut off the bulb, and together with the withered skin also the underlying pellicle is removed. By removing the bottom and the neck of the onion, the onion is so to say "wounded" and decay of the onion is promoted. The pellicle serves as a protection of the onion, for instance against dehydration and thereby against withering of the underlying skin. Thus, peeled onions have a short shelf life, or alternatively it is necessary to remove a further (withering) skin of the onion before consumption.

It is an aim of the invention to prolong the shelf life of peeled onions. It is another aim of the invention to provide onions with a more attractive appearance. It is a further aim of the invention to provide a cheap, easy and efficient method for peeling onions.

According to the invention, during the peeling process of the onions, said bottom and at least part of said neck of the onion is not removed from the onion and the pellicle extending immediately under the at least one removed most withered skin and enclosing an outer less withered skin of the bulb and said part of the neck is also not removed when said outer most withered skin is removed. Thereby the onion retains its original shape without being damaged, and has a natural preserving enclosure in the form of the outer pellicle. The onions are then packaged, stored and shipped to the stores for sale to the public.

An efficient and secure manner of peeling the onion, without running the risk of damaging the pellicle, is achieved by aiming a gas flow at said onion, which flow has a strength so strong that it is able to tear the at least one outer most withered skin apart such that it can be removed from the onion, and which flow has a strength so weak that the pellicle extending immediately under the at least one removed most withered skin is at least substantially not damaged. The gas flow is preferably aimed substantially at the neck of the onion so as to tear the at least one outer most withered skin apart. The outer withered skin is usually already frayed near the outer end of the neck, so it can be torn apart at that location with the greatest ease. A good result was achieved by using a 4 mm wide nozzle aimed at the neck of the onion, and an adjustable gas (air) pressure having a maximum of 8 bar.

Said onion is preferably pre-treated before the withered skin is removed, by keeping said onion at a temperature between 25 and 35 degrees Celsius, preferably at a temperature between 28 and 32 degrees Celsius for some time, for instance for three days, so that the outer most withered skin is removed more easily.

The invention also relates to a peeled onion comprising a bulb having a bottom and a neck,wherein one of the pellicles of the onion forms the outermost layer of said onion enclosing an unwithered outer skin of the bulb and said part of the neck.

The invention will now be elucidated by means of an embodiment as shown in the drawings, wherein:

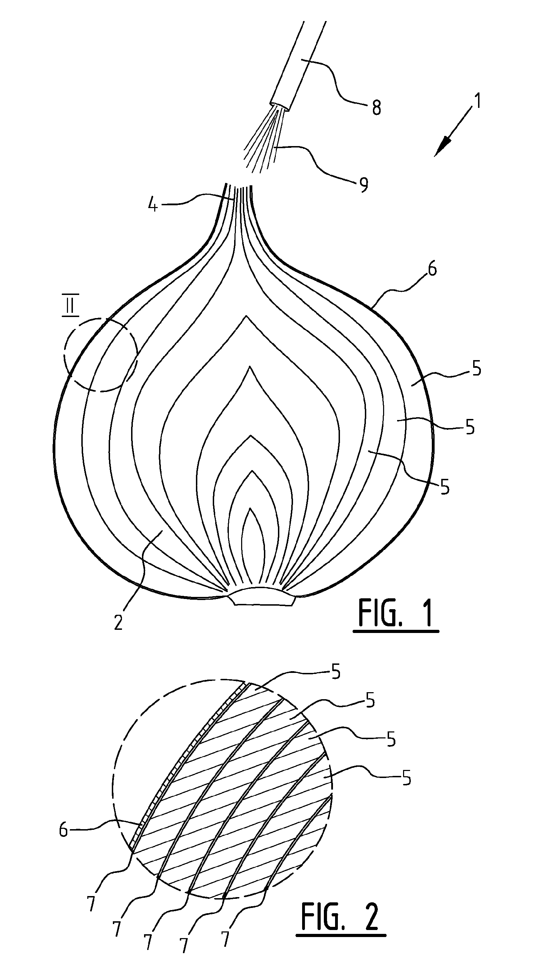

Figure 1 shows a cross section of an onion; and
Figure 2 shows a detail of the cross section of Figure 1.

An onion 1 comprises a bulb 2, which comprises a bottom 3 and a neck 4. The bulb is built up by a multitude of white skins 5, each enclosing one another. The outer skin 6 is withered by dehydration, and has a brown appearance thereby. Between each pair of skins 5,6 a thin intermediate layer or pellicle 7 is present. Said pellicle 7 is transparent and has a very fine thin structure forming an impermeable layer around the skins 5.

The outer withered skin 6 is removed by putting the neck of the onion in the air flow 9 that is blown out of a 4 mm nozzle 8, which is connected to an adjustable air pump. The pressure of the pump can be adjusted between 2 and 8 bar by the operator, in order to regulate the force that is necessary to tear the outer withered skin 6 apart and blow it from the onion, and in order to avoid damage of the outer pellicle 7. Thus, the aim of the operator is to remove the outer skin 6 without damaging the outer pellicle 7, and this is achieved in an easy and secure way by the method of the invention.

It will be appreciated by the man skilled in the art that many variations on the above described method are possible within the scope of the invention, which scope is defined by the attached claims.

### Reference numerals:

- 1:: onion
- 2:: bulb
- 3:: bottom
- 4:: neck
- 5:: skin
- 6:: outer most withered skin
- 7:: pellicle
- 8:: nozzle
- 9:: air flow

## Claims

1. Method for peeling an onion (1) comprising a bulb (2) having a bottom (3) and a neck (4), wherein at least one outer most withered skin (6) of the onion (1) is removed, **characterized in that** said bottom (3) and at least part of said neck (4) of the onion is not removed from the onion and **in that** the pellicle (7) extending immediately under the at least one removed most withered skin (6) and enclosing an outer less withered skin (5) of the bulb (2) and said part of the neck (4) is also not removed.

2. Method according to claim 1, wherein a gas flow (9) is aimed at said onion (1), which flow (9) has a strength so strong that it is able to tear the at least one outer most withered skin (6) apart such that it can be removed from the onion (1), and which flow (9) has a strength so weak that the pellicle (7) extending immediately under the at least one removed most withered skin (6) is at least substantially not damaged.

3. Method according to claim 2, wherein the gas flow (9) is aimed substantially at the neck (4) of the onion (1) so as to tear the at least one outer most withered skin (6) apart.

4. Method according to claim 1, 2 or 3, wherein said onion is pre-treated before the withered skin is removed, by keeping said onion at a temperature between 25 and 35 degrees Celsius, preferably at a temperature between 28 and 32 degrees Celsius for some time, for instance for three days.

5. Peeled onion (1) comprising a bulb (2) having a bottom (3) and a neck (4), **characterized in that** one of the pellicles (7) of the onion forms the outermost layer of said onion enclosing an unwithered outer skin (5) of the bulb (2) and said neck (4).
